# EUROPEAN PATENT SPECIFICATION

(11) **EP 1 415 977 B1**
(45) Date of publication and mention of the grant of the patent: **07.07.2010**
(21) Application number: 03100192.8
(22) Date of filing: 30.01.2003
(51) Int. Cl.: C07C 51/42, C07C 57/07, B01D 53/72, B01D 53/38, F23G 5/00, F23G 7/05, F23G 7/06, C08F 20/06

(54) **A process for treating wastes from acrylic acid and polyacrylic acid production processes**
Verfahren zur Aufarbeitung von Abfallprodukten aus den Acrylsäure- und den Polyacrylsäure Produktionsprozessen
Procédé de traitement de déchets provenant de procédés de production d'acide acrylique et d'acides polyacryliques

(30) Priority: 30.01.2002 JP 2002020866
(43) Date of publication of application: 06.05.2004
(73) Proprietor: NIPPON SHOKUBAI CO., LTD., Osaka-shi, Osaka 541 (JP)
(72) Inventor: Matsumoto, Yukihiro, Hyogo (JP); Nakahara, Sei, Hyogo (JP); Ishizaki, Kunihiko, Osaka (JP)
(74) Representative: Quintelier, Claude

(56) References cited:
- WO-A-97/48669

## Description

### BACKGROUND OF THE INVENTION

### 1. FIELD OF THE INVENTION

The present invention relates to a process for treating by-products from an acrylic acid production process, and a consequent process such as polyacrylic acid production process wherein the same acrylic acid is used as a raw material. In particular, it relates to a process to treat efficiently waste gases, oils and waters discharged from a production process of high purity acrylic acid composed of a variety of steps such as reaction, separation, purification, etc., and waste gases and waters from a production process for polyacrylic acids such as water-absorbent resins.

### 2. DESCRIPTION OF THE PRIOR ART

Acrylic acid has been produced in a variety of processes. These processes are composed of a variety of steps such as reaction, separation and purification in the course of conversion from raw materials finally into high purity acrylic acid. By-products and impurities separated and removed from each of the steps are discharged as waste gases, waste waters and waste oils (hereinafter, waste waters and oils will be occasionally referred to as waste liquids.) Especially in a commercial scale production requiring mass production of the high purity product at a reasonable cost, the waste gases and liquids are discharged in a great amount from these plants. From a viewpoint of environmental pollution prevention, these waste gases and liquids are favorably to be treated in an advanced manner, and at the same time, reduction in the cost for treating the waste gases and liquids are required from a viewpoint of production cost. Accordingly, a new process to treat the waste gases and liquids efficiently is needed to meet these requirements.

As such a process, Published Japanese Translation of PCT International Publication 2000-514419, for example, discloses a process in which gaseous low-boiling components discharged from a production process for (meth)acrylic acid are burned in a combustion step and a waste water containing low- and medium-boiling components is supplied to the same combustion step for combusting the low-boiling components. Japanese Examined Patent Publication No. 63-67,090 also discloses an apparatus for treating waste gases utilizing a heat exchanger.

Conventionally, acrylic acid has been used as a raw material for various chemical products, but especially in recent years, a large amount of polyacrylic acids such as water-absorbent resins have been produced in polyacrylic acid production plants, located at the same or neighboring sites of the acrylic acid production plants, continuously from the raw material, acrylic acid, that is supplied without being isolated or packaged. In the case where polyacrylic acids are produced at the same or neighboring sites of the acrylic acid production plant as described above, the polyacrylic acid production process also discharges wastes such as waste gases and waste liquids as well as the acrylic acid production process, there has also been a need for a new process to efficiently treat these wastes in an advanced manner.

The present invention has been completed to solve such problems associated with the conventional waste treatment methods as described above, and the object of the present invention is to provide a new process to treat efficiently in an advanced manner at least waste oil discharged from the acrylic acid production process and waste waters discharged from the polyacrylic acid production process wherein the acrylic acid produced as above is converted to various polyacrylic acids such as water-absorbent resins.

### SUMMARY OF THE INVENTION

Accordingly, the present invention is a process for treating waste discharged from processes for production of acrylic acid and a polyacrylic acid, characterized in that at least waste oil from said acrylic acid production process, and waste water from said polyacrylic acid production process are combusted simultaneously.

### BRIEF DESCRIPTION OF THE DRAWINGS

Fig.1 is a schematic diagram illustrating an acrylic acid production process and a consecutive polyacrylic acid production process according to the present invention.

Fig. 2 is a schematic diagram illustrating an acrylic acid production process and a subsequent polyacrylic acid production process according to the present invention.

### DESCRIPTION OF THE PREFERRED EMBODIMENTS

The present inventors have found, after intensive studies to solve the problems above, that in processes for production of acrylic acid and consecutive polyacrylic acids, it became possible to treat the wastes therefrom efficiently in an advanced manner by combining and burning simultaneously at least waste oil, from said acrylic acid production process and waste water from said polyacrylic acid production process.

Polyacrylic acids in the present invention are (co)polymers, having acrylic acid and/or the salt thereof as a main component (i.e., containing acrylic acid and/or the salt thereof preferably in an amount of 70 mol % or more, more preferably, 90 mol % or more), and examples thereof include water-soluble polyacrylic acids (or the salts thereof), water-absorbent resins (water-absorbent polyacrylic acids, or the salts thereof). The polyacrylic acids are preferably monovalent salts, and more preferably alkali metal salts or ammonium salts. These polyacrylic acids may further be copolymerized with other monomers, crosslinked in the presence of a crosslinking agent in an amount of 0.001 to 5 mol %, or graft-polymerized with other hydrophilic polymers such as starch and polyvinylalcohol. Meanwhile, the water-soluble polyacrylic acids (or the salts thereof) are polymers that are substantially 100% soluble in water, and the water-absorbent resins are polyacrylic acids (or the salts thereof) having crosslinked structures, swelling but insoluble in water, absorbing pure water or saline in an amount of 3 fold or more, preferably 10 to 1000 folds more than the weight of the polymers, and forming hydrogels that are essentially water-insoluble (the content of water-soluble components being 25 mass % or less, more preferably 10 mass % or less). Some examples of these water-absorbent resins and the methods of determining their physical parameters thereof, are given in U.S. Patent 6,107,196, U.S. Patent 6,107,358, U.S. Patent 6,174,978 and U.S. Patent 6,241,928.

The waste gases in the present invention are gases containing flammable compounds (e.g., hydrocarbons having 1 to 6 carbons, carbon monoxide, organic acids, aldehydes, esters, alcohols, etc.), and examples of the waste gases from the acrylic acid production process include waste gases discharged from heat exchangers etc., and from unabsorbed gases discharged from an absorption column. Various waste gases are discharged from the polyacrylic acid production process, including a gas discharged from a polymerization reactor, the waste drying gases that are used for drying the polyacrylic acid resins (preferably water-absorbent resins), the gases discharged from the steps for modification of the resins (e.g., surface crosslinking) and others, but in the present invention, the waste drying gases are preferable. The waste oils are liquids containing organic matters as the main component and a small amount of water up to its solubility therein, and examples thereof include distillation bottom liquids containing high boiling-point impurities, distillates containing low boiling-point impurities and the like. The waste waters are aqueous liquids containing water as the main component and a small amount of organic matters dissolved up to their solubility, and examples thereof include water generated during reaction of raw materials for production of acrylic acid, various waste waters discharged from the processes (water supplied for absorption, extraction and neutralization, atmospheric moistures, etc.), water generated during neutralization, waste waters used for operation of and discharged from apparatuses such as ejectors, waste waters generated by trapping waste gases in the absorption column employing an absorption solvent such as a NaOH solution (herein, the concentration of sodium hydroxide is preferably, but not limited to, in the range of 0.01 mass % to the saturation concentration, more preferably 0.1 to 40 mass %), cleaning waste waters that are used for cleaning the apparatuses, and the like. Thus, the waste oils and waters to be treated according to the present invention come from a variety of production steps, and the compositions of materials contained in these waste oils and waters are not particularly restricted.

The polyacrylic acid production process in the present invention is a process to produce polyacrylic acids using acrylic acid monomer as a raw material, and the polyacrylic acids are preferably water-absorbent resins produced by using acrylic acid as a raw material.

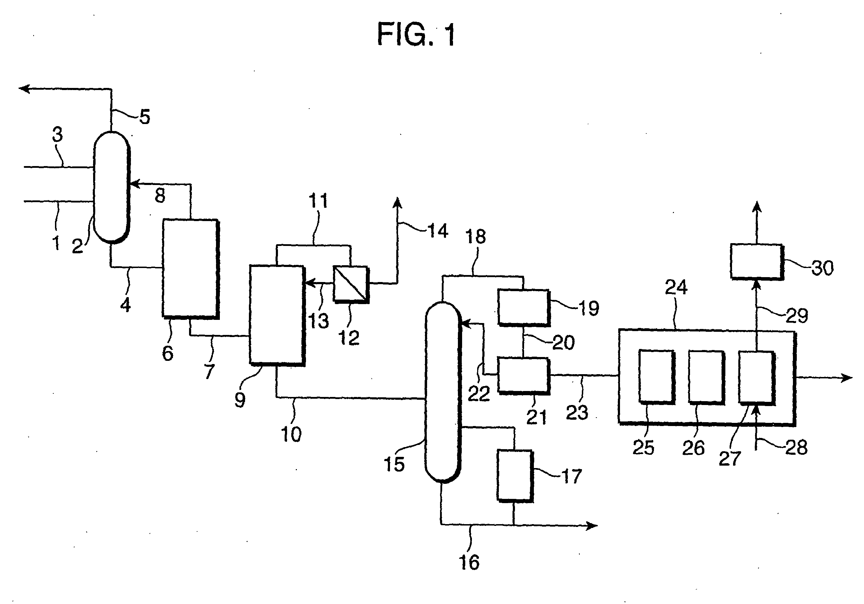

Hereinafter, the present invention will be described referring to Fig. 1 that exemplifies production processes to produce acrylic acid from reaction products of propylene and/or acrolein and to produce water-absorbent resins from acrylic acid produced in the above process.

Reaction products obtained in catalytic oxidation of propylene and/or propane (hereinafter, occasionally referred to as "propylene and the like") are fed via line 1 into absorption column 2. The reaction products are usually a gas produced by catalytic gas-phase oxidation of propylene and the like with a gas containing molecular oxygen under a suitable condition. Into absorption column 2, an absorption liquid is fed via line 3, and the reaction products and the absorption liquid are mutually contacted in absorption column 2 under a suitable condition, giving an acrylic acid solution. When a low boiling solvent (having a boiling point lower than that of acrylic acid) is used as the absorption liquid, and the low boiling solvent (preferably, water) and the reaction products are contacted in absorption column 2, acrylic acid contained in the reaction products are absorbed into the absorption liquid, providing an acrylic acid solution. Unabsorbed reaction products remaining in absorption column 2 after acrylic acid is absorbed and removed are withdrawn via line 5 as a waste gas. The waste gas, still containing raw materials such as propane and the like, may be supplied to any steps including the aforementioned catalytic gas phase oxidation step, or to the combustion step of the present invention as will be described below.

Alternatively, a high boiling solvent (having a boiling point higher than that of acrylic acid) can be used as the absorption liquid. In this case, the reaction products are fed via or not via a cooler not shown in the figure, while the high boiling solvent (e.g., a mixed solvent of diphenylether and biphenyl) is fed separately into the absorption column, and part of the reaction products are absorbed by gas-liquid contact into the high boiling solvent, giving an acrylic acid solution. The reaction gas remaining not absorbed in the absorption column is withdrawn as a waste gas. The waste gas may be supplied to any steps including the catalytic gas phase oxidation step. The waste gas may alternatively be supplied, via any other treatment steps, to the combustion step of the present invention.

The acrylic acid solution contains, as well as acrylic acid, unreacted raw materials such as propylene and the like, by-products such as formaldehyde, acrolein, furfural, benzaldehyde, formic acid, acetic acid, maleic acid, acrylic acid dimer, along with additives such as polymerization inhibitors.

The acrylic acid solution obtained by absorption of the reaction products may be fed directly via line 4, or indirectly via any steps according to specific needs, into distillation column 9. If any additional steps are involved, waste gases and liquids therefrom may also be supplied to and treated in the combustion step of the present invention. For the purpose of reducing low boiling compounds such as acrolein remaining in the acrylic acid solution, stripping column 6, for example, may be additionally installed as shown in Fig. 1. The acrylic acid solution, with low boiling compounds such as acrolein removed in stripping column 6, is then fed via line 7 into azeotropic distillation column 9. Meanwhile, the low boiling compounds vaporized in the stripping column are taken off as a waste gas, via line 8 and absorption column 2, to the outside. The stripping column waste gas may be supplied, together or separately with the waste gas from the absorption column, to the combustion step of the present invention. Alternatively, the waste gas may be sent to any other steps.

When water is used as the absorption liquid, water and low boiling compounds such as acetic acid contained in the acrylic acid solution are subsequently removed by azeotropic distillation in azeotropic distillation column 9 in the presence of an azeotropic solvent (composed of at least one solvent). Although the azeotropic dehydration distillation column using a solvent that forms an azeotrope with water is described herein as an example in the present invention, any other distillation steps may be employed in place of the azeotropic distillation for separation and removal of the impurities from the acrylic acid solution, and in this case, the method, condition, and the number of distillations, or the combination thereof can be suitably selected according to the specific needs.

The suitable azeotropic solvent may be selected from azeotropic solvents well known in the art, but is preferably an azeotropic solvent that does not form an azeotrope with acrylic acid. An azeotropic solvent scarcely soluble in water is more preferable as it becomes easier to separate the condensed azeotrope into the solvent and an aqueous phase and to recover and reuse the solvent. Favorable examples of the azeotropic solvent include toluene, xylene, hexane, heptane, cyclohexane, methylisobutylketone, butyl acetate, etc. The azeotropic solvent may be a single solvent or a mixture of two or more solvents, and it is favorable from a viewpoint of efficiency in azeotropic distillation to add the solvent in an amount sufficient to exert an effective separation.

Low boiling by-products having a boiling point lower than that of acrylic acid and low boiling compounds such as water are withdrawn via line 11 as an azeotropic distillate (hereinafter, occasionally referred to as distillate) with the azeotropic solvent from the top of the distillation column. Acrylic acid, high boiling impurities such as maleic acid and acrylic acid dimer, and polymerization inhibitors are removed via line 10 from the bottom of the azeotropic distillation column and fed to the next step. The azeotrope is fed, via line 11 shown in the figure, into an apparatus for separating azeotropic mixture 12 such as a decanter, wherein the azeotrope separates into an organic phase (azeotropic solvent) and an aqueous phase (containing low boiling by-products). The aqueous phase may be discharged as a waste water. The waste water may be sent to and treated in an additional step for recovering the azeotropic solvents still remaining therein, for example by means of distillation, before discharged as a waste water. While the azeotropic solvent separated in the azeotrope-separation apparatus 12 is recycled via line 13 into azeotropic distillation column 9 in the figure, it may also be supplied to any other steps not shown in the figure. Alternatively, a fresh azeotropic solvent may be separately supplied to distillation column 9 via a line not shown in the figure, and the method of supplying the solvent is not particularly restricted to the example in the figure. In addition, the operational condition of azeotropic distillation column 9 is not particularly restricted, and any condition may be employed insofar as the condition is suitable as a production process for acrylic acid.

The crude acrylic acid withdrawn from the bottom of the azeotropic distillation column 9 is fed via line 10 into distillation (rectification) column 15. Prior to being fed into the distillation column 15, the crude acrylic acid may be further treated in other distillation steps for the purpose of reducing the amount of impurities therein, for example, in a separation column specially designed to remove acetic acid or high boiling impurities not shown in the figure. Liquids containing impurities discharged from these additional steps may be also treated as the waste oil of the present invention. The crude acrylic acid may, of course, be supplied to another purification step in place of the distillation column 15. For example, the crude acrylic acid may be fed to an additional azeotropic distillation column, wherein pure acrylic acid essentially free from acetic acid, water, and azeotropic solvent is obtained by additional azeotropic distillation therein. In other words, distillation column 15 may be replaced with any combination of other separation and purification steps employed as a production process for acrylic acid to meet specific needs and conditions.

The crude acrylic acid in the present invention is a liquid containing acrylic acid as the main component that was obtained by azeotropic distillation of the acrylic acid solution as described above. As the crude acrylic acid contains by-products and impurities such as acetic acid, formaldehyde, acrolein, propionic acid, maleic acid, acetone, furfural, benzaldehyde, etc., it is subsequently subjected to further purification (e.g., by distillation, crystallization, etc.) to remove these impurities and by-products. The purified acrylic acid essentially free from aldehydes after such a purification step is referred to as high purity acrylic acid.

Although in the present invention the high purity acrylic acid is obtained by distillation of the crude acrylic acid in distillation column 15, if the crude acrylic acid contains both high boiling impurities having a boiling point higher than that of acrylic acid and low boiling impurities having a boiling point lower than that of acrylic acid, it is favorable for the purpose of obtaining the high purity acrylic acid that the crude acrylic acid is supplied in advance to an additional distillation step as described above to decrease the low and/or high boiling impurities.

In distillation column 15, distillation (rectification) of the crude acrylic acid is carried out, providing high purity acrylic acid. In the case of the example shown in the figure, acrylic acid in the crude acrylic acid fed into the distillation column 15 is evaporated by distillation, and the vapor exiting from the top of the column is conducted via line 18 into a condenser 19 wherein the vapor becomes cooled and condensed. The condensate thus obtained in condenser 19 is transferred via line 20 into a condensate reflux tank 21. A part of the condensate stored in the condensate reflux tank 21 may be recycled as a reflux liquid into the distillation column 15 and then to condenser 19. The other part of the condensate in the condensate reflux tank 21 is supplied, via or not via other treatment steps, to water-absorbent resin production process 24 as a raw material. The condensate is high purity acrylic acid (purified acrylic acid) essentially free from impurities. The purity of the high purity acrylic acid may vary according to the distillation condition, but is usually not less than 99.5 mass %. High boiling point impurities and polymerization inhibitors present in the crude acrylic acid are separated from acrylic acid by distillation and concentrated at the bottom of the distillation column and discharged via line 16 as a waste oil.

Other apparatuses attached to the distillation column 15 are not particularly restricted, and any heating means such as a reboiler, a thin film evaporator, a heater, heating jackets, etc., may be installed if desirable. Meanwhile in the present invention, a part of the bottom liquid in the distillation column 15 containing polymerization inhibitors and impurities is circulated to reboiler 17, which serves as an additional heat source, while the other part thereof is discharged. The bottom liquid may be discharged and supplied to the waste liquid treatment step of the present invention or to any other treatment steps.

Although not shown in the figure, it is desirable to add a polymerization inhibitor into feed solutions in the various distillation steps in an amount necessary for preventing polymerization of acrylic acid. A suitable method of adding the polymerization inhibitor are, but not particularly limited to, for example, a method of adding the inhibitor previously into the feed liquids to be fed into the distillation columns such as the acrylic acid solution and the condensate reflux solution, or of adding the polymerization inhibitor (either, powder, liquid or gas) directly into the distillation column. In the case, for example, where molecular oxygen is to be supplied as the polymerization inhibitor into the distillation column, an oxygen stream may be directly fed into the bottom of the column by means of air bubbling and the like. Alternatively, oxygen may be supplied indirectly by feeding a solvent in which the polymerization inhibitor is previously dissolved.

The polymerization inhibitor is not particularly limited insofar as they are effective to inhibit polymerization of acrylic acid, and suitable examples thereof include hydroquinone, hydroquinone monomethylether, phenothiazine, 4-hydroxy-2,2,6,6-tetramethylpiperidine, nitrosophenol, copper salt compounds such as copper dimethyldithiocarbamate, manganese compounds such as manganese acetate, etc. The polymerization inhibitor may be a single compound or a mixture of several compounds, and the composition of the polymerization inhibitors in the mixture may be properly selected to meet individual requirements.

Part of the high purity acrylic acid is supplied via line 23 to water-absorbent resin production process 24. In the water-absorbent resin production process, acrylic acid is subjected to processing in neutralization step 25, polymerization step 26, and drying step 27, for production of water-absorbent resins. Any processing may also be added for the purpose of improving physical properties of the resins, and thus, for example, a crosslinking step may be present simultaneously in or after the polymerization step. Although only an example utilizing the high purity acrylic acid is described herein, the crude acrylic acid or a mixture of the high purity or crude acrylic acid and water may also be used in the resin production process under a certain condition.

Neutralization in the neutralization step 25 may be carried out by any method well known in the art, and a suitable example of the method is, but not limited to, a method to add a predetermined amount of basic compounds, powdery or dissolved in an aqueous solution, to the acrylic acid or the polyacrylic acids (or the salt thereof) obtained as described above. The neutralization step may be placed upstream or downstream, or placed both upstream and downstream of the polymerization step.

As the basic compounds used for neutralization of acrylic acid and polyacrylic acids, basic compounds well known in the art, for example, carbonate salts, bicarbonate salts, alkali metal hydroxides, ammonia, organic amines, etc., may be suitably used. The extent of neutralization of polyacrylic acid is arbitrary, and acrylic acid may be adjusted to any neutralization extent (e.g., in the range of 30 to 100 mol %).

The method of polymerization in the polymerization step is not particularly limited, and thus polymerization methods well known in the art such as polymerization employing a radical polymerization initiator, radiation polymerization, electron beam polymerization, and ultraviolet ray polymerization employing a photosensitizer may be suitably used. Further, other specific conditions such as the kind and concentration of the polymerization initiator and the other polymerization conditions may be selected arbitrary to meet individual requirements. Crosslinking agents and other monomers along with additives well known in the art such as water-soluble chain transfer agents and hydrophilic polymers may of course be added if desired.

After polymerization and neutralization, the resulting acrylate salt polymers (hereinafter, referred to as "water-absorbent resins") are subjected to the drying step. The method of drying the resin is not particularly limited, and the water absorption resins may be dried by any drying means well known in the art such as hot air dryers, fluidized bed dryers, Nautor-type driers, etc., at a desired drying temperature (preferably, at 70 to 230°C). The high temperature gas, supplied via line 28 to the drying step 27 for drying and discharged via line 29 therefrom, may be supplied directly as a waste gas to the waste gas treatment step of the present invention, or alternatively to absorption column 30, wherein the waste high temperature gas is washed with an absorption liquid such as an aqueous NaOH solution separately fed thereto, organic matters in the waste gas being absorbed by gas-liquid contact. The resulting absorption solution may also be supplied as a waste water to the waste water treatment step of the present invention.

The water-absorbent resins dried in the drying step may be used as they are, or further converted into desired shapes by way of granulation, crushing, and surface crosslinking, or into desired products to meet the requirements in individual applications, for example, by addition of a variety of additives such as reducing agents, flavors, binders, etc.

General production processes of acrylic acid and of consecutive water-absorbent resins are so far described referring to Fig. 1. Hereinafter, methods of combustion treatment of the waste gas and waste liquid (waste water and oil) from the acrylic acid production process and the waste gas and water from the water-absorbent resin production process will be described.

According to an embodiment of the present invention, all of the waste gases, waters and oils from the acrylic acid and water-absorbent resin production processes may be supplied to a combustion step, or parts of the waste gases, waters and oils discharged therefrom may be combined in an arbitrary proportion and supplied to the combustion step, by adjusting the supply of the waste to the capacity of combustion. For the purpose of reducing the amount of treatment, it is favorable to concentrate the waste gases, waters and oils prior to being supplied to the combustion step.

In the present invention, the preferable combustion apparatuses are, but not particularly limited to, those well known in the art such as vertical combustion furnaces and horizontal combustion furnaces for combustion of waste gas/mixed liquids and waste liquids, and those such as catalytic combustors utilizing catalysts for combustion of waste gases.

In the present invention, the waste oils discharged from the acrylic acid production process (hereinafter, referred to as "acrylic acid waste oils") and the waste waters from the water-absorbent resin production process (hereinafter, refereed to as "water-absorbent resin waste waters") are combusted simultaneously. The water-absorbent resin waste waters, being hardly combustible, have required an additional combustion aid for combustion thereof, resulting in a higher combustion cost. By simultaneously combusting the acrylic acid waste oils and the water-absorbent resin waste waters, the highly flammable acrylic acid waste oils serve as a combustion aid, enabling efficient combustion of the water-absorbent resin waste waters. Thus, the simultaneous combustion enables reduction in combustion cost compared to the case of the water-absorbent resin waste waters being combusted alone. In addition, the simultaneous treatment of the acrylic acid waste oils and the water-absorbent resin waste waters leads to dilution of the acrylic acid waste oils, resulting in prevention of adhesive combustion deposits, presumably derived from Na present in a relatively high concentration in the acrylic acid waste oils, onto the internal wall of the combustion furnace and thus in remarkable reduction in the number of cleanings of the combustion furnace.

The acrylic acid waste oils and the water-absorbent resin waste waters may be supplied to the same combustion furnace via separate feed lines and mixed therein for combustion. However, it is preferable that the acrylic acid waste oils and the water-absorbent resin waste waters are premixed and the mixed liquid is then fed to the combustion furnace, since it prevent clogging due to adhesion of the acrylic acid waste oils in the feed pipelines and in the tips of the supplying means of the mixed liquid into the combustion furnace (e.g., nozzle, etc.) In addition, by combining the wastes into a mixed liquid, the acrylic acid waste oils with a relatively high viscosity become less viscous by dilution, thus allowing to avoid clogging in nozzles when the mixture is sprayed into the combustion furnace by means of nozzles and the like, and to atomize the mixed liquid in a manner favorable for combustion.

The mixing proportion of the acrylic acid waste oils and the water-absorbent resin waste waters in the mixed liquid is, but not particularly limited, preferably in the range of 3 to 30 vol. % (waste waters/waste oils) in order to combust the water-absorbent resin waste waters with high efficiency and to decrease the viscosity of the acrylic acid waste oils to such an extent that the effect described above can be attained.

Waste waters with low flammability are also discharged from the acrylic acid production process (hereinafter, referred to as "acrylic acid waste waters"), and the waste waters may also be combined to and burned together with the acrylic acid waste oils and the water-absorbent resin waste waters. The acrylic acid waste waters may be, as in the case of the water-absorbent resin waste waters, fed into the combustion furnace through a feed line different from those of the water-absorbent resin waste waters and the acrylic acid waste oils, or alternatively premixed with the acrylic acid waste oils or the water-absorbent resin waste waters, and the mixture is then fed to the combustion furnace. The acrylic acid waste waters may of course be premixed with the mixed liquid of the acrylic acid waste oils and the water-absorbent resin waste waters and the mixture is then supplied to the combustion furnace. When the acrylic acid and water-absorbent resin waste waters are combined with the acrylic acid waste oils, the sum of the acrylic acid and the water-absorbent resin waste waters is preferably in the range of 3 to 30 vol. % with respect to the acrylic acid waste oils (100%). In this case, the mixing proportion of the acrylic acid and water-absorbent resin waste waters is not particularly restricted.

Alternatively, the waste gases discharged from the acrylic acid production process (hereinafter, referred to as "acrylic acid waste gases") may be combined to the acrylic acid waste oils and the water-absorbent resin waste waters and burned together. When the acrylic acid waste gases, containing the organic matters and the like as described above, are introduced into the combustion furnace where the acrylic acid waste oils and the water-absorbent resin waste waters (or, additionally with the acrylic acid waste waters) are burned, impurities such as the organic matters and the like in the acrylic acid waste gases can also be burned and removed.

According to an embodiment of the present invention, the waste gases from the water-absorbent resin production process (hereinafter, referred to as "water-absorbent resin waste gases") may be burned with the acrylic acid waste oils. When the water-absorbent resin waste gases containing organic matters such as acrylic acid as described above are burned together with the acrylic acid waste oils, organic matters in the water-absorbent resin waste gases can also be burned and removed by the combustion heat of the acrylic acid waste oils.

Alternatively, the acrylic acid waste gases may be burned with both the acrylic acid waste oils and the water-absorbent resin waste gases. When the acrylic acid waste gases, containing flammable compounds and the like, are introduced into the combustion furnace wherein the acrylic acid waste oils are being burned, the organic matters in the acrylic acid waste gases can also be burned and removed, giving a combustion waste gas free from or reduced in the amount of the organic matters. In the case where a mixed gas of acrylic acid waste gases and the water-absorbent resin waste gases and the acrylic acid waste oils are burned together, the concentration of flammable compounds in the acrylic acid waste gases can be diluted by the water-absorbent resin waste gases, leading to the higher efficiency of combustion and removal of the flammable compounds in the combustion gases to be treated, compared to the case where only the acrylic acid waste oils and the acrylic acid gases are burned simultaneously, The highly viscous acrylic acid waste oils sometimes causes problems of clogging in the feed lines and the adhesive combustion deposits in the combustion furnace, and thus are favorably diluted as described above with other waste waters. Accordingly, the acrylic acid waste oils diluted with the acrylic acid waste waters and/or the water-absorbent resin waste waters, and the water-absorbent resin waste gases or a mixed gas of the water-absorbent resin waste gases and the acrylic acid waste gases are preferably combusted simultaneously.

According to an embodiment of the present invention, waste gases, oils, and waters discharged from an acrylic acid production process and waste gases and waters discharged from a polyacrylic acid (such as a water-absorbent resin) production process utilizing the same acrylic acid, are combined in a proper proportion and burned simultaneously. By employing the simultaneous combustion, these waste gases, oils and waters can be treated efficiently in an advanced manner.

### EXAMPLE

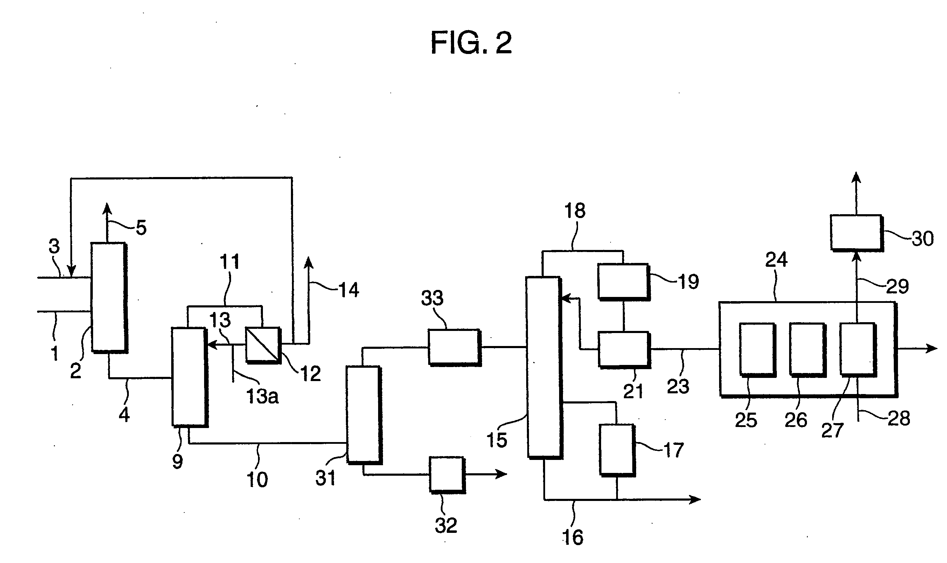

Hereinafter, examples of the present invention will be described with reference to Fig. 2.

### EXAMPLE 1

A gas containing acrylic acid obtained by gas-phase oxidation of raw gases containing propylene was fed via line 1 into absorption column 2, and distilled water from distillation column 9 was fed as an absorption solvent via line 3 into the same absorption column, to give an acrylic acid solution. The acrylic acid solution was supplied to azeotropic distillation column 9 and an azeotropic solvent was fed via line 13a into the azeotropic distillation column. Low boiling impurities containing water are separated as the distillate from the top of the column. The distillate was fed into an apparatus for separating azeotropic solvents (decanter) 12, and after oil/water separation, a part of the aqueous phase was recycled to absorption column 2, and the other part was discharged (1.7 m3/h) via line 14 as a waste water (hereinafter, referred to as "waste water A"). Meanwhile, the waste water A had a composition of 1.8 mass % of acrylic acid, 5.7 mass % of acetic acid, and the balance of water (containing a trace amount of impurities). The bottom liquid exiting from the bottom of the azeotropic distillation column was fed via line 10 into distillation column 31 for separating high boiling point impurities. By distillation in the distillation column, crude acrylic acid containing a small amount of aldehydes was withdrawn from the top of the column, while the bottom liquid exiting from the bottom of the column was fed into thin film evaporator 32. The bottom liquid was concentrated in the thin film evaporator 32, and discharged (250 kg/h) as a waste oil (waste oil A). Waste oil A had a composition of 3 mass % of acrylic acid, 37 mass % of acrylic acid dimer, 6 mass % of maleic acid, and the balance of other organic liquids. Part of the crude acrylic acid thus obtained was treated with hydrazine hydrate in an apparatus 33, and then fed into rectification column 15. By distillation in the rectification column, high purity acrylic acid was distilled from the top of the column. The bottom liquid exiting from the bottom of the column was, while part thereof being recycled into the column via reboiler 17, discharged (40 kg/h) as a waste oil (waste oil B). The composition of the waste oil B was 45 mass % of acrylic acid, 32 mass % of acrylic acid dimer, and the balance of other organic liquids.

The high purity acrylic acid obtained was supplied to water-absorbent resin production process 24, wherein the acrylic acid was neutralized in step 25, polymerized in step 26, and the resulting polyacrylic acid resins (e.g., wet water-absorbent resins and hydrous gel-like polymers) were dried in step 27 by hot gas at a temperature of 150 to 200°C to give water-absorbent resins. The hot gas, supplied via line 28 into and then discharged via line 29 from the drying step, was sent into absorption column 30, and washed by contacting with an absorption solution (aqueous 5% NaOH solution) supplied thereto via a line not shown in the figure, to give (0.7m³/h) a waste water (waste water B). Waste oils A and B and waste waters A and B were supplied to a vertical combustion furnace not shown in the figure and burned therein at 950°C. After a month of operation, there was no combustion deposit adherent to the inner surface of the furnace found upon inspection.

### EXAMPLE 2

The waste gas (containing 1000 vol. ppm of acrylic acid and 19.8 vol. % of water) discharged (555 Nm³/min) from the top of the absorption column in the acrylic acid production process described in EXAMPLE 1 above, and the hot waste gas (containing 30 vol. ppm of acrylic acid and 19.8 vol. % of water) discharged (300 Nm³/min) from the water-absorbent resin production process were preheated in a plate heat exchanger and supplied to and burned in a catalytic combustion apparatus. After a month of operation, there was no deposit in the heat exchanger found upon inspection.

### EXAMPLE 3

The waste gas (containing 1000 vol. ppm acrylic acid and 19.8 vol. % of water) discharged (555 Nm³/min) from the top of the absorption column in the acrylic acid production process described in EXAMPLE 1, the waste water A discharged (1.7 m³/h) after oil/water separation of the distillate form the top of the azeotropic distillation column, and the hot waste gas (containing 30 vol. ppm of acrylic acid and 19.8 vol. % of water) discharged (300 Nm³/min) from the water-absorbent resin production process are supplied to an combustion furnace. The waste gas, the waste water A, and the hot waste gas above are fed and burned in the combustion furnace that is separately supplied with natural gas to maintained the internal temperature at 900°C, giving a purified non-hazardous gas to be released outside.

## Claims

1. A process for treating wastes from an acrylic acid production process and a polyacrylic acid production process, **characterised in that** it comprises combusting simultaneously at least waste oil from said acrylic acid production process, and waste water from said polyacrylic acid production process.

2. A process according to claim 1, **characterized in that** a mixed liquid obtained by combining the waste oil from said acrylic acid production process and the waste water from said polyacrylic acid production process and all or part of the waste gases from said acrylic acid production process and/or from said polyacrylic acid production process are combined and combusted.

3. A process according to claim 1 or 2, **characterized in that** said polyacrylic acid production process is a water-absorbent resin production process.

## Patentansprüche

1. Verfahren zur Aufbereitung von Abfallprodukten aus einem Acrylsäure-Produktionsprozess und einem Polyacrylsäure-Produktionsprozess, **dadurch gekennzeichnet, dass** es das gleichzeitige Verbrennen von mindestens dem Abfallöl aus dem Acrylsäure-Produktionsprozess und dem Abwasser aus dem Polyacrylsäure-Produktionsprozess umfasst.

2. Verfahren nach Anspruch 1, **dadurch gekennzeichnet, dass** eine Mischflüssigkeit, die durch Vereinigen des Abfallöls aus dem Acrylsäure-Produktionsprozess und dem Abwasser aus dem Polyacrylsäure-Produktionsprozess erhalten wird, und alle oder ein Teil der Abgase aus dem Acrylsäure-Produktionsprozess und/oder aus dem Polyacrylsäure-Produktionsprozess vereinigt und verbrannt werden.

3. Verfahren nach Anspruch 1 oder 2, **dadurch gekennzeichnet, dass** es sich bei dem Polyacrylsäure-Produktionsprozess um einen Produktionsprozess eines Wasser absorbierenden Harzes handelt.

## Revendications

1. Procédé de traitement de déchets provenant d'un procédé de production d'acide acrylique et d'un procédé de production d'acide polyacrylique, **caractérisé en ce qu'**il consiste à mettre simultanément en combustion au moins les résidus d'huile dudit procédé de production d'acide acrylique et les eaux résiduaires dudit procédé de production d'acide polyacrylique.

2. Procédé selon la revendication 1, **caractérisé en ce qu'**un liquide mélangé obtenu en combinant les résidus d'huile dudit procédé de production d'acide acrylique et les eaux résiduaires dudit procédé de production d'acide polyacrylique et la totalité ou une partie des gaz résiduaires dudit procédé de production d'acide acrylique et / ou dudit procédé de production d'acide polyacrylique sont combinés et mis en combustion.

3. Procédé selon la revendication 1 ou 2, **caractérisé en ce que** ledit procédé de production d'acide polyacrylique est un procédé de production de résine hydrophile.
